# EUROPÄISCHE PATENTSCHRIFT

(11) **EP 0 976 683 B1**
(45) Veröffentlichungstag und Bekanntmachung des Hinweises auf die Patenterteilung: **06.04.2005**
(21) Anmeldenummer: 98114145.0
(22) Anmeldetag: 29.07.1998
(51) Int. Cl.: C02F 3/00, C02F 3/32

(54) **Verfahren zur Vererdung einer wässrigen Suspension organischer Stoffe, insbesondere von Klärschlamm**
Process for transforming into humus an aqueous suspension of organic matter, especially sewage sludge
Procédé de transformation en humus d'une suspension aqueuse de matiére organique, en particulier des boues d'égout

(43) Veröffentlichungstag der Anmeldung: 02.02.2000
(73) Patentinhaber: Pauly, Udo, Dr., 37249 Neu-Eichenberg (DE)
(72) Erfinder: Pauly, Udo, Dr., 37249 Neu-Eichenberg (DE)
(74) Vertreter: Rehberg Hüppe + Partner

(56) Entgegenhaltungen:
- WO-A-96/32016
- US-A- 4 678 582
- US-A- 5 320 663
- US-A- 5 711 784
- US-A- 5 785 735

## Beschreibung

Die Erfindung bezieht sich auf ein Verfahren zur Vererdung einer wässrigen Suspension organischer Stoffe, insbesondere von Klärschlamm, bei dem die Suspension von oben in ein Vererdungsbecken eingebracht wird, wobei sich in dem Vererdungsbecken über einer unteren Abdichtung eine Drainageschicht und eine Pflanzsubstratschicht befindet, in die Pflanzen eingepflanzt sind, und bei dem durch die Drainageschicht Wasser aus dem Vererdungsbecken abgezogen wird, das keinen nennenswerten Trockensubstanzanteil aufweist.

Bekannte Verfahren der eingangs beschriebenen Art werden verwendet, um Klärschlämme, die bei Kläranlagen mit nur geringem Trockensubstanzanteil anfallen, zu vererden, d. h. extrem aufzugkonzentrieren. Sie sind eine Alternative zu einem mechanischen Aufkonzentrieren von Klärschlamm und zeichnen sich beispielsweise durch einen deutlich geringeren Energieverbrauch, die Verzichtbarkeit von Chemikalien, hohe Wirtschaftlichkeit und ein interessantes Endprodukt aus.

Mit der Aufkonzentration des Klärschlamms werden bei der Vererdung auch die in dem Klärschlamm enthaltenen Schwermetalle aufkonzentriert. Die Schwermetallkonzentration des vererdeten Klärschlamms schränkt dessen Verwertung ein und macht sie sogar teilweise unmöglich. Das heißt, daß er trotz seiner interessanten organischen Zusammensetzung, seiner hohen Nährstoffgehalte und seiner positiven bodenphysikalischen Eigenschaften nur eingeschränkt in der Landwirtschaft als Bodenverbesserungs- und Düngemittel oder im Garten- und Landschaftsbau als Substrat oder Substratkomponente eingesetzt werden kann. Nicht verwertbarer vererdeter Klärschlamm muß entsorgt, daß heißt deponiert oder verbrannt und deponiert werden.

Aus der EP 0 558 784 A1 ist ein Verfahren zu Eliminierung von Schwermetallen aus Klärschlamm bekannt. Die Eliminierung soll zwischen einer Vorentwässerung und einer Granulierung des Klärschlamms erfolgen. Der Klärschlamm wird zu Freisetzung der in den Schlammpartikeln inkorporierten Schwermetalle erwärmt. Der Übergang der Schwermetalle von der festen in die flüssige Phase wird durch Beimischung eines aus Säure bestehenden Komplexbildners herbeigeführt. Die feste und die flüssige Phase werden dann durch Zentrifugieren getrennt. Der Feststoff wird nachgewaschen, granuliert und getrocknet. Um bei dieser Vorgehensweise den wesentlichen Anteil der Schwermetalle aus dem Klärschlamm zu entfernen, müssen die Komplexbildner in einer hohen relativen Konzentration, d. h. mit erheblichem chemischen Überschuß dem Klärschlamm zugesetzt werden. Hieraus resultiert ein schlechter Wirkungsgrad der Komplexbildner und damit ein erheblicher Kostenaufwand für das bekannte Verfahren neben dem apparativen Aufwand, der bereits für die grundsätzliche Realisation der einzelnen Verfahrensschritte zu betreiben ist.

Aus der DE 42 18 863 A1 ist ein Verfahren zur Behandlung von schwermetallbelasteten Stoffen wie Bagger- und Klärschlämmen sowie zur Behandlung von Abwässern bekannt. Dabei werden die in den Stoffen enthaltenen Schwermetalle mittels eines Chelatbildners gebunden und anschließend einem Ionentauschersystem zugeführt, so daß eine Rückgewinnung von Schwermetallen und gegebenenfalls von Chelatbildnern möglich ist. Als Chelatbildner werden Komplexbildner wie z. B. Zitronensäure, Salicylsäure, EDTA, NTA usw. verwendet. Auch bei diesem Verfahren müssen die Komplexbildner mit einem erheblichen Überschuß eingesetzt werden, um den größten Anteil der Schwermetalle aus dem schwermetallbelasteten Stoffen zu entfernen. Die Nachteile dieses bekannten Verfahrens entsprechen daher den Nachteilen des zuvor beschriebenen bekannten Verfahren.

Ein weiteres Verfahren zum Entfernen von Metallen aus Klärschlamm ist aus der DE 30 05 635 A1 bekannt. Auch hierbei werden Komplexbildner eingesetzt. Dabei werden die Komplexbildner einem aeroben Klärschlamm zugegeben. Anschließend erfolgt eine mechanische Trennung in eine feststoffreiche und eine feststoffarme Phase, wobei die im Wasser gelösten Metallverbindungen zum überwiegenden Teil in der feststoffarmen Phase enthalten sind. Mittels eines Fäll- und/oder Flockungsmittels werden aus der feststoffarmen Phase die gelösten Metallverbindungen ausgefällt und mittels einer weiteren mechanischen Trennung von der feststoffarmen Phase getrennt. Auch hier bestehen dieselben Nachteile wie bei dem zuvor beschriebenen Stand der Technik.

Der Erfindung liegt die Aufgabe zugrunde, ein Verfahren der eingangs beschriebenen Art aufzuzeigen, mit dem die Schwermetallkonzentration der vererdeten Suspension der organischen Stoffe herabgesetzt werden kann, um die Verwertungsmöglichkeiten der vererdeten Suspension wesentlich auszuweiten. In einer Weiterentwicklung soll eine neue Einsatzmöglichkeit für das gesamte Verfahren zur Vererdung der Suspension aufgezeigt werden.

Die Aufgabe der Erfindung wird bei einem Verfahren der eingangs beschriebenen Art dadurch gelöst, daß der in das Vererdungsbecken eingebrachten Suspension Leachmittel zugegeben werden, die Schwermetalle aus der aufgelandeten Suspension herauslösen und durch die Drainageschicht zusammen mit den Schwermetallen und dem abgezogenen Wasser wieder aus dem Vererdungsbecken austreten.

Bei dem neuen Verfahren können als Leachmittel grundsätzlich dieselben Komplexbildner Verwendung finden, wie bei den bekannten Verfahren zum Entfernen von Schwermetallen aus Klärschlämmen. Die Leachmittel können aber auch Säuren oder Basen verwendet werden, die zu einer Ph-abhängigen Löslichkeitserhöhung der Schwermetalle führen. Konkret kann es sich bei den Leachmitteln beispielsweise um Weinsäure, Essigsäure, Zitronensäure, Ethylendiamintetraessigsäure, Nitrilotriessigsäure, Salzsäure, Salpetersäure, Natriumhydroxid und/oder Calziumoxid handeln.

Bei dem neuen Verfahren werden die Leachmittel zwar der zuletzt in das Vererdungsbecken eingebrachten Suspension zugesetzt, sie reagieren aber auch mit den Schwermetallen der bereits aufgelandeten Suspension. Bezogen auf die insgesamt in dem Vererdungsbecken enthaltenen Schwermetalle werden die Leachmittel der Suspension vorzugsweise in nur relativ geringer Konzentration zugegeben, sie können diesbezüglich sogar im Unterschuß vorliegen. Dies führt in vorteilhafter Weise dazu, daß die Leachmittel im Vergleich zu bekannten Verfahren sehr wirkungsvoll, daß heißt mit hohem Wirkungsgrad eingesetzt werden. Wenn bei den geringen Konzentrationen der Leachmittel jeweils auch nur ein relativ geringer Anteil der in der aufgelandeten Suspension enthaltenen Schwermetalle entfernt werden kann, ist dies bei dem neuen Verfahren unbedenklich. Zum einen stehen sehr große Zeiträume zur Verfügung, um den Schwermetallgehalt der aufgelandeten Suspension abzusenken. Typischerweise wird ein Verfahren der eingangs beschriebenen Art über mehrere Jahre hinweg durchgeführt. Zum anderen sind die in der aufgelandeten Suspension enthaltenen Schwermetalle genau lokalisiert und daher während der Durchführung des Verfahrens ungefährlich. So macht sich insgesamt betrachtet der Vorteil positiv bemerkbar, daß die Leachmittel bei dem neuen Verfahren mit einem sehr hohen Wirkungsgrad zur Entfernung der Schwermetalle aus der aufgelandeten Suspension eingesetzt werden. Dieser Vorteil begründet die Wirtschaftlichkeit des neuen Verfahrens. Zudem ist nur ein geringer apparativer Aufwand für die Durchführung des neuen Verfahrens erforderlich.

Die Leachmittel können der in das Vererdungsbecken eingebrachten Suspension durch einfaches Zugießen zugegeben werden. Vorzugsweise werden die Leachmittel der Suspension jedoch vor deren Einbringen in das Vererdungsbecken zugesetzt werden. Hierdurch wird eine gute Vermischung der Leachmittel und der Suspension erreicht.

Typischerweise wird die Suspension der organischen Stoffe quasi-kontinuierlich in das Vererdungsbecken eingebracht. Dabei ist unter quasi-kontinuierlich ein bezogen auf die Gesamtlaufzeit des Verfahrens häufiges chargenweises Einbringen von Suspension in das Vererdungsbecken zu verstehen, daß beispielsweise immer dann unterbrochen werden kann, wenn das Vererdungsbecken einen gewissen Füllstand erreicht hat.

Die Leachmittel werden der in das Vererdungsbecken eingebrachten Suspension jedoch vorzugsweise diskontinuierlich zugesetzt. So muß das aus dem Vererdungsbecken abgezogene Wasser nicht kontinuierlich von den Schwermetallen befreit werden. Vielmehr reicht eine Behandlung des abgezogenen Wassers zur Entfernung der Schwermetalle für eine gewisse Zeit nach dem Zusetzen der Leachmittel aus, um den weit überwiegenden Teil der herausgelösten Schwermetalle aufzufangen.

Es ist bekannt, daß verschiedene Leachmittel unterschiedliche Schwermetalle mit unterschiedlichem Wirkungsgrad aus organischen Stoffen herauszulösen vermögen. Um alle verschiedenen in der Suspension enthaltenen Schwermetalle möglichst weitgehend zu entfernen, ist es daher sinnvoll, verschiedene Leachmittel der in das Vererdungsbecken eingebrachten Suspension zuzusetzen. Dies kann durchaus auch nacheinander erfolgen, da bei dem neuen Verfahren sehr viel Zeit zur Verfügung steht. Zudem kann die Belastung der Pflanzen durch die Leachmittel bei einem nacheinander Zusetzen verschiedener Leachmittel zu der in das Vererdungsbecken eingebrachten Suspension begrenzt werden. Durch die geringe relative Konzentration der Leachmittel ist die Belastung der Pflanzen jedoch in den meisten Fällen sowieso unbedenklich.

Zum Aufkonzentrieren der Schwermetalle können diese bei dem neuen Verfahren aus dem aus dem Vererdungsbecken abgezogenen Wasser ausgefällt oder anderweitig entfernt werden. Dies kann in konventioneller Weise und wie bereits im Stand der Technik beschrieben erfolgen.

Die Drainageschicht besteht bei den neuen Verfahren vorzugsweise aus Drainagekies, und bei den in das Pflanzsubstrat eingepflanzten Pflanzen handelt es sich vorzugsweise um Schilfpflanzen. Dies ist eine bewährte Kombination für Vererdungsbecken. Der Drainagekies ermöglicht den flächigen Austritt des Wassers im unteren Bereich des Vererdungsbeckens. Die Schilfpflanzen drainieren und belüften die aufgelandete Suspension und verdampfen Wasser.

Das neue Verfahren eignet sich für verschiedenste Suspensionen organischer Stoffe, beispielsweise aerob und anaerob stabilisierte Klärschlämme und Fäkalschlämme.

Das neue Verfahren eignet sich auch zur Behandlung organischer Suspensionen mit Klärschlamm-ähnlichem Wassergehalt anderer Herkunft und Zusammensetzung. Dazu gehören Suspensionen, die bei der Vergärung von Biomüll aus der getrennten Sammlung oder aus Fraktionen des Hausmülls anfallen, Suspensionen, wie sie bei der industriellen bzw. gewerblichen Verarbeitung von biologisch abbaubaren Stoffen wie beispielsweise Lebensmitteln anfallen, sowie Suspensionen aus der Vergärung nachwachsender Rohstoffe zum Zweck der Energiegewinnung. So kann Biomüll unter Zusatz von Wasser und unter Freisetzung von Methangas vergoren werden, wonach die so entstehende Suspension in das Vererdungsbecken eingebracht wird. Das Vergären von Biomüll ist grundsätzlich bekannt. Das Ergebnis ist in vielen Fällen eine Suspension mit einem Klärschlamm-ähnlichen Trockensubstanzanteil. Bislang werden solche flüssigen Gärrückstände jedoch noch mechanisch oder thermisch auf höhere Trockensubstanzteile aufkonzentriert. Die Verwendung von Vererdungsbecken für diese Suspensionen ist bereits ein erster neuer und wesentlicher Schritt zur Aufkonzentrierung der Suspensionen ohne hohen Energieaufwand. Durch die zusätzliche Entfernung von Schwermetallen gemäß dem neuen Verfahren werden besonders hochwertige Komposte bzw. Erden gewonnen. Gleichzeitig kann das aus dem Vererdungsbecken abgezogene und von den Schwermetallen befreite Wasser wieder dem Bioreaktor zugeführt werden, in dem die Vergärung des Biomülls erfolgt.

Die Erfindung wird im folgenden anhand von zwei Ausführungsbeispielen näher erläutert und beschrieben. Dabei zeigt
- Figur 1: in sechs Teilbildern den langjährigen Ablauf des Verfahrens beim Vererden von Klärschlamm,
- Figur 2: den Einsatz der Leachmittel bei dem Verfahren zum Vererden von Klärschlamm und
- Figur 3: die Vererdung von Biomüll unter Anwendung des neuen Verfahrens.

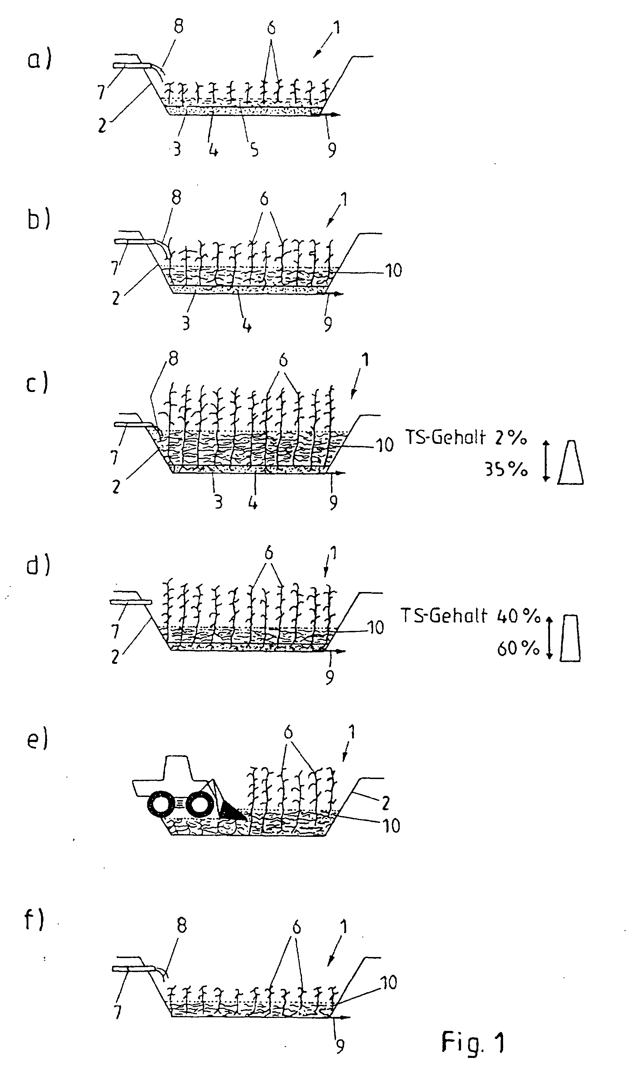

In Figur 1a ist ein Vererdungsbecken 1 in einem schematischen Querschnitt dargestellt. Das Vererdungsbecken 1 wird seitlich und nach unten durch eine Abdichtung 2 begrenzt. In das Vererdungsbecken 1 ist auf die Abdichtung 2 eine Drainageschicht 3 aus Drainagekies 4 eingebracht. Auf der Drainageschicht 3 befindet sich ein Pflanzsubstrat 5, in das Schilfpflanzen 6 eingepflanzt sind. Über einen Zulauf 7 wird Klärschlamm 8 von oben in das Vererdungsbecken 1 eingelassen. Über die Drainageschicht 3 wird Wasser 9, das durch einen Pfeil angedeutet ist, aus dem Vererdungsbecken 1 abgezogen. Weiteres Wasser wird von den Schilfpflanzen 6 verdunstet. Figur 1a zeigt den Zustand des Vererdungsbeckens 1 im ersten Jahr der Durchführung des neuen Verfahrens zur Vererdung des Klärschlamms 8. Der Klärschlamm 8 wird in einer Vielzahl von Chargen und damit quasi-kontinuierlich in das Vererdungsbecken 1 eingebracht.

Figur 1b zeigt den Zustand des Vererdungsbeckens 1 im zweiten Jahr. Es wird weiterhin Klärschlamm 8 in das Vererdungsbecken 1 eingebracht und Wasser 9 aus dem Vererdungsbecken 1 abgezogen. Dabei wächst die Schicht von aufgelandetem Schlamm 10 kontinuierlich an und wird von dem Wurzelwerk der Schilfpflanzen 6 durchsetzt und auf diese Weise drainiert und belüftet.

Figur 1c zeigt den Zustand im dritten und vierten Jahr der Durchführung des neuen Verfahrens. Gegenüber Figur 1b ist die Schicht des aufgelandeten Schlamms 10 stark angewachsen. Ebenso ist das Wurzelwerk und die Grünmasse der Schilfpflanzen 6 größer geworden. Im rechten Teil von Figur 1c ist der Trockensubstanzgehalt (TS-Gehalt) der Füllung des Vererdungsbeckens 1 im dritten und vierten Jahr der Durchführung des Verfahrens angedeutet. Im oberen Bereich des Vererdungsbeckens liegt der Trockensubstanzgehalt des zuletzt aufgelandeten Klärschlamms bei 1 bis 5 %. In den darunter befindlichen Bereichen sind bereits deutlich vergrößerte Trockensubstangehalte erreicht.

Figur 1d zeigt das Vererdungsbecken 1 in fünften Jahr der Durchführung des neuen Verfahrens. Die Zufuhr des Klärschlamms ist eingestellt. Der aufgelandete Klärschlamm 10 wird weiter getrocknet und vererdet, wobei weiter Wasser 9 aus dem unteren Bereich des Vererdungsbeckens 1 abgezogen werden kann. Der im rechten Teil von Figur 1d angedeutete Trockensubstanzgehalt kann dabei schon Werte bis zu 60 % erreichen.

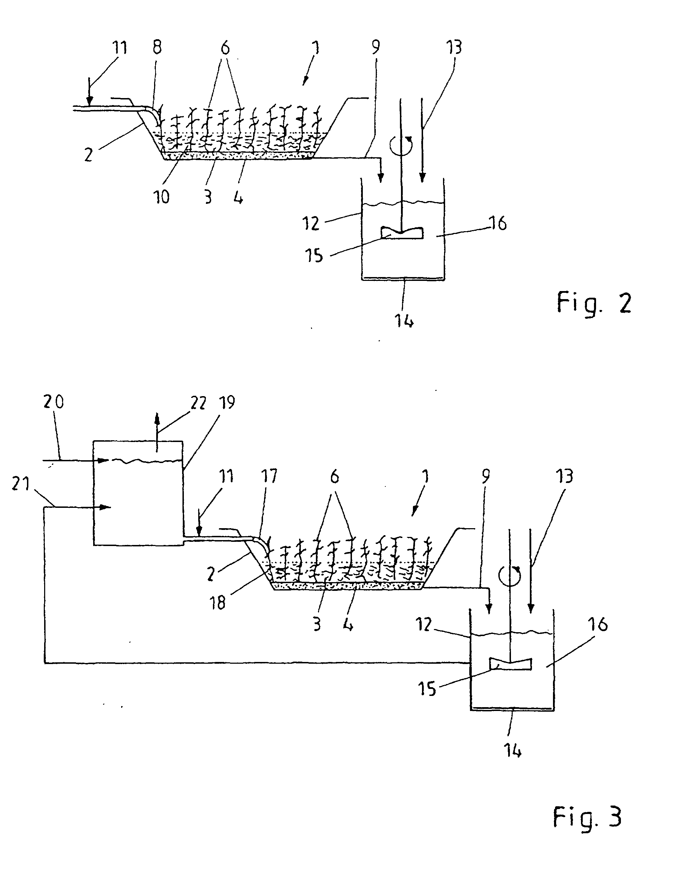

Am Ende des fünften Jahres der Durchführung des Verfahrens wird das Vererdungsbecken wie in Figur 1e skizziert teilweise geräumt. Die dabei entnommene Erde hat vor allem aufgrund der anhand von Figur 2 weiter unten beschriebenen wesentlichen Verminderung ihres Schwermetallgehalts sehr gute Chancen für eine Vermarktung auf konventionellen Wegen in der Landwirtschaft zusätzlich aber als neues Klärschlammprodukt auch im Garten- und Landschaftsbau, wo sie als Substrat oder Substratkomponente einsetzbar ist.

Figur 1f zeigt das Vererdungsbecken 1 im sechsten Jahr der Durchführung des Verfahrens. Aus dem in dem Vererdungsbecken 1 verbliebenen Wurzelwerk sind neue Schilfpflanzen 6 ausgeschlagen. Neuer Klärschlamm 8 wird in das Vererdungsbecken 1 zum Auflanden und Vererden eingebracht. Funktionell entspricht das Vererdungsbecken 1 gemäß Figur 1f dem Vererdungsbecken 1 gemäß Figur 1a in ersten Jahr.

Der hier beschriebene Verfahrenszyklus von 6 Jahren kann bei entsprechender Tiefe des Vererdungsbeckens auch auf 8, 10, 20 oder mehr Jahre ausgedehnt werden.

Bei der Auflandung und Vererdung des Klärschlamms gemäß Figur 1 werden die in dem Klärschlamm enthaltenen Schwermetalle normalerweise etwa in demselben Maße aufkonzentriert, wie die organische Masse abgebaut wird und der Trockensubstanzgehalt des Klärschlamms ansteigt, da die Schwermetalle in nur geringem Maße mit dem nahezu trockensubstanzfreien Wasser 9 aus dem unteren Bereich des Vererdungsbeckens 1 abgezogen werden. Die Schwermetallbelastung des vererdeten Klärschlamms erreicht schnell so hohe Werte, daß eine Verwertung des gemäß Figur 1e in dem Vererdungsbecken 1 entnommenen vererdeten Klärschlamms eingeschränkt, wenn nicht gar unmöglich ist. Daher werden bei dem neuen Verfahren, wie in Figur 2 schematisch dargestellt ist, dem dem Vererdungsbecken zugeführten Klärschlamm Leachmittel zugegeben, die die Schwermetalle auch aus dem bereits aufgelandetem Klärschlamm 10 herauslösen. Die Leachmittel werden hier dem Klärschlamm vor dem Einbringen in das Veerdungsbecken zugesetzt. Es ist aber auch eine Zugabe der Leachmittel direkt in das Vererdungsbecken möglich. Die Schwermetalle werden mit dem aus dem Vererdungsbecken 9 abgezogenen Wasser von dem aufgelandeten Klärschlamm 10 entfernt. Die Leachmittel 11 werden dabei im Vergleich zu der Gesamtkonzentration der Schwermetalle in dem Veerdungsbecken 1 in nur geringer Konzentration eingesetzt. Sie können sogar im Unterschuß vorliegen. Hieraus resultiert aufgrund des Massenwirkungsgesetzes ein hoher Wirkungsgrad der eingesetzten Mengen der Leachmittel. Zu diesem extrem hohen Wirkungsgrad trägt auch die große zur Verfügung stehende Reaktionszeit für eine Reaktion zwischen den Leachmitteln und den Schwermetallen in dem aufgelandetem Klärschlamm bei. Für diese Reaktion stehen viel längere Zeiträume zur Verfügung, als sie im Rahmen der Aufbereitung des Klärschlamms vor den Einbringen in das Vererdungsbecken 1 möglich wären. Die Art der verwendeten Leachmittel ist auf die Art der aus den aufgelandeten Klärschlamm 10 herauszulösenden Schwermetalle abzustimmen. Weiterhin ist bei der Auswahl der Leachmittel zu berücksichtigen, daß die Schilfpflanzen 6 und insbesondere deren Wurzelwerk keine irreparablen Beschädigungen erfahren. Unter Berücksichtigung der Belastung der Schilfpflanzen 6 durch die jeweiligen Leachmittel ist auch festzulegen, ob sie dem Klärschlamm kontinuierlich oder diskontinuierlich zugegeben werden. Bei einer diskontinuierlichen Zugabe ist die Belastung des aus dem Vererdungsbecken 1 abgezogenen Wassers 9 durch Schwermetalle über längere Zeiträume gering und meist vernachlässigbar. Sie steigt dann mit der Zugabe der jeweiligen Leachmittel zu dem Klärschlamm an und sinkt danach wieder ab. Das mit Schwermetallen belastete, aus dem Vererdungsbecken 1 abgezogene Wasser 9 kann in einem mit einem Rührwerk 15 versehenen Fällungsgenerator 12 mit einem Fällungsmittel 13 versetzt werden, um die Schwermetalle auszufällen. Der Fällungsrückstand 14 enthält dann in aufkonzentrierter Form die aus dem Klärschlamm ausgewaschenen Schwermetalle, während der Überstand 16, der bei entsprechender Aufbereitung bisher nicht verbrauchte und/oder regenerierte Leachmittel enthält, dem Vererdungsbecken für eine weitere Entfernung von Schwermetallen wieder zugeführt werden kann. Statt der hier skizzierten Ausfällung der Schwermetalle sind auch andere bekannte Maßnahmen zur Immobilisierung der Schwermetalle geeignet, wie beispielsweise ein Ionenaustausch oder eine Fällung in einem Festbettreaktor.

Figur 3 zeigt eine spezielle Anwendungsform des neuen Verfahrens, bei dem nicht Klärschlamm 8 sondern ein flüssiger Gärrückstand 17 in dem Vererdungsbecken 1 aufgelandet und vererdet wird. Gewonnen wird der Gärrückstand 17 in einem geschlossenen Bioreaktor 19, in dem Biomüll 20 unter Zugabe von Wasser 21 vergoren wird. Dabei wird Methangas 22 freigesetzt. Durch die Vergärung entsteht der Gärrückstand 17, der einen Trockensubstanzanteil aufweist, der Klärschlamm-ähnlich ist. In dem Vererdungsbecken 1 wird der Gärrückstand 17 zu Kompost bzw. Erde 18 umgesetzt. Dabei werden auch dem flüssigen Gärrückstand 17 Leachmittel 11 zugesetzt, um Schwermetalle, die aus dem Biomüll 20 stammen, aus der Erde 18 auszuwaschen. Die Schwermetalle werden auch hier in dem Fällungsreaktor 12 ausgefällt und derart aufkonzentriert. Der Überstand 16 aus dem Fällungsreaktor 12 kann dann wieder entweder dem Bioreaktor 19 oder, im Falle lohnender Gehalte an Leachmittel, dem Vererdungsbecken 1 zugeführt werden.

Das in Figur 3 dargestellte Gesamtsystem zur Kompostierung bzw. Vererdung von Biomüll zeichnet sich durch einen extrem geringen Energieaufwand und problemlose Durchführbarkeit im großen Umfang aus. Insbesondere bezüglich des Energieaufwands ist es bekannten Verfahren zur großtechnischen Kompostierung von Biomüll überlegen.

### BEZUGSZEICHENLISTE:

- 1 -: Vererdungsbecken
- 2 -: Abdichtung
- 3 -: Drainageschicht
- 4 -: Drainagekies
- 5 -: Pflanzsubstratschicht
- 6 -: Schilfpflanze
- 7 -: Zulauf
- 8 -: Klärschlamm
- 9 -: Wasser
- 10 -: aufgelandeter Klärschlamm

- 11 -: Leachmittel

- 12 -: Fällungsreaktor
- 13 -: Fällungsmittel
- 14 -: Fällungsrückstand
- 15 -: Rührwerk
- 16 -: Überstand
- 17 -: Gärrückstand
- 18 -: Erde
- 19 -: Bioreaktor
- 20 -: Biomüll

- 21 -: Wasser
- 22 -: Methangas

## Patentansprüche

1. Verfahren zur Vererdung einer wässrigen Suspension organischer Stoffe, insbesondere von Klärschlamm, bei den die Suspension von oben in ein Vererdungsbecken eingebracht wird, wobei sich in den Vererdungsbecken über einer unteren Abdichtung eine Drainageschicht und eine Pflanzsubstratschicht befindet, in die Pflanzen eingepflanzt sind, und bei dem durch die Drainageschicht Wasser aus dem Vererdungsbecken abgezogen wird, das keinen nennenswerten Trockensubstanzanteil aufweist, **dadurch gekennzeichnet, daß** der in das Vererdungsbecken (1) eingebrachten Suspension (8, 17) Leachmittel (11) zugegeben werden, die Schwermetalle aus der Suspension (10, 18) herauslösen und durch die Drainageschicht (3) zusammen mit den Schwermetallen und dem abgezogenen Wasser (9) wieder aus den Vererdungsbecken (1) austreten.

2. Verfahren nach Anspruch 1, **dadurch gekennzeichnet, daß** als Leachmittel (11) Weinsäure, Essigsäure, Zitronensäure, Ethylendiamintetraessigsäure (EDTA), Nitrilotriessigsäure (NTA), Salzsäure (HCL), Salpetersäure (HNO₃), Natriumhydroxid (NaOH) und/oder Calziumoxid (CaO) verwendet werden.

3. Verfahren nach Anspruch 1 oder 2, **dadurch gekennzeichnet, daß** die Leachmittel (11) der Suspension (8, 17) vor deren Einbringen in das Vererdungsbecken (1) zugesetzt werden.

4. Verfahren nach einem der Ansprüche 1 bis 3, **dadurch gekennzeichnet, daß** die Leachmittel (11) der in das Vererdungsbecken (1) eingebrachten Suspension (8, 17) diskontinuierlich zugegeben werden.

5. Verfahren nach einen der Ansprüche 1 bis 4, **dadurch gekennzeichnet, daß** verschiedene Leachmittel (11) der in das Vererdungsbecken (1) eingebrachten Suspension (8, 17) nacheinander zugegeben werden.

6. Verfahren nach einem der Ansprüche 1 bis 5, **dadurch gekennzeichnet, daß** die Schwermetalle aus dem aus dem Vererdungsbecken (1) abgezogenen Wasser (9) insbesondere durch Ausfällung entfernt werden.

7. Verfahren nach einem der Ansprüche 1 bis 6, **dadurch gekennzeichnet, daß** die Drainageschicht (3) aus Drainagekies (4) besteht.

8. Verfahren nach einem der Ansprüche 1 bis 7, **dadurch gekennzeichnet, daß** die in das Pflanzsubstrat (5) eingepflanzten Pflanzen Schilfpflanzen (6) sind.

9. Verfahren nach einem der Ansprüche 1 bis 8, **dadurch gekennzeichnet, daß** eine vergärbare Suspensionen unter Freisetzung von Methangas vergoren wird, bevor ihr Gärrückstand (17) als wässrige Suspension organischer Stoffe in das Vererdungsbecken eingebracht wird.

10. Verfahren nach Anspruch 9, **dadurch gekennzeichnet, daß** die vergärbare Suspension aus Biomüll (20) oder nachwachsenden Rohstoffen durch Zusatz von Wasser (21) hergestellt wird.

## Claims

1. A method of transforming an aqueous suspension of organic matter, especially sewage sludge, into humus, the suspension being introduced from above into a transformation into humus basin, a drainage layer and a plant substrate layer into which plants are planted being present in the transformation in the humus basin above a lower sealing, and water which comprises no relevant dry matter portion being removed through the drainage layer out of the transformation into humus basin, **characterized in that** leaching agents (11) are added to the suspension (8, 14) introduced into the transformation into humus basin (1), which dissolve heavy metals out of the suspension (10, 18), and which get again out of the transformation into humus basin (1) through the drainage layer (3) together with the heavy metals and the removed water (9).

2. The method of claim 1, **characterized in that** tartaric acid, acetic acid, citric acid, ethylenediamine tetra-acetic acid (EDTA), nitrilo-acetic acid (NTA), hydrochloric acid (HCl), nitric acid (HNO₃), sodium hydroxide (NaOH) and/or calcium oxide (CaO) are used as the leaching agent (11).

3. The method of claim 1 or 2, **characterized in that** the leaching agents (11) are added to the suspension (8, 17) prior to its introduction into the transformation into humus basin (1).

4. The method of any of the claims 1 to 3, **characterized in that** the leaching agents (11) are discontinuously added to the suspension (8, 17) introduced into the transformation into humus basin (1).

5. The method of any of the claims 1 to 4, **characterized in that** the different leaching agents (11) are sequentially added to the suspension (8, 17) introduced into the transformation into humus basin (1).

6. The method of any of the claims 1 to 5, **characterized in that** the heavy metals are separated from the water (9) removed out of the transformation into humus basin (1), especially by precipitation.

7. The method of any of the claims 1 to 6, **characterized in that** the drainage layer (3) is consisting of drainage gravel (4).

8. The method of any of the claims 1 to 7, **characterized in that** the plants planted into the plant substrate are reed plants (6).

9. The method of any of the claims 1 to 8, **characterized in that** a fermentable suspension is fermented setting free methane gas, prior to its fermentation remainder (17) being introduced as the aqueous suspension of organic matter into the transformation into humus basin.

10. The method of claim 9, **characterized in that** the fermentable suspension is produced from organic garbage (20) or reproductive raw material by the addition of water (21).

## Revendications

1. Procédé de transformation en humus d'une suspension aqueuse de matières organiques, en particulier de boues d'épuration, dans lequel la suspension est introduite depuis le haut dans un bassin de transformation en humus, une couche de drainage et une couche de substrat végétal, dans laquelle sont plantées des plantes, se trouvant dans le bassin de transformation en humus au-dessus d'une étanchéité inférieure, et dans lequel, par la couche de drainage, de l'eau qui ne contient pas de proportions notables de substances sèches est soutirée du bassin de transformation en humus, **caractérisé en ce qu'**on ajoute à la suspension (8, 17), introduite dans le bassin de transformation en humus (1), des moyens de lixiviation (11) qui dissolvent les métaux lourds de la suspension (10, 18) et qui ressortent du bassin de transformation en humus (1), par la couche de drainage (3), avec les métaux lourds et l'eau (9) soutirée.

2. Procédé selon la revendication 1, **caractérisé en ce qu'**on utilise comme moyens de lixiviation (11) de l'acide tartrique, de l'acide acétique, de l'acide citrique, de l'acide éthylodiaminetétraacétique (EDTA), de l'acide nitrilotriacétique (NTA), de l'acide chlorhydrique (HCL), de l'acide nitrique (HNO₃), de l'hydroxyde de sodium (NaOH) et/ou de l'oxyde de calcium (CaO).

3. Procédé selon la revendication 1 ou 2, **caractérisé en ce que** les moyens de lixiviation (11) sont ajoutés à la suspension (8, 17) avant son introduction dans le bassin de transformation en humus (1).

4. Procédé selon l'une des revendications 1 à 3, **caractérisé en ce que** les moyens de lixiviation (11) sont ajoutés de manière discontinue à la suspension (8, 17) introduite dans le bassin de transformation en humus (11).

5. Procédé selon l'une des revendications 1 à 4, **caractérisé en ce que** de différents moyens de lixiviation (11) sont ajoutés successivement à la suspension (8, 17) introduite dans le bassin de transformation en humus (1).

6. Procédé selon l'une des revendications 1 à 5, **caractérisé en ce que** les métaux lourds sont éliminés, en particulier par précipitation, de l'eau (9) soutirée du bassin de transformation en humus (1).

7. Procédé selon l'une des revendications 1 à 6, **caractérisé en ce que** la couche de drainage (3) est constituée de graviers de drainage (4).

8. Procédé selon l'une des revendications 1 à 7, **caractérisé en ce que** les plantes, plantées dans le substrat végétal (5), sont des roseaux (6).

9. Procédé selon l'une des revendications 1 à 8, **caractérisé en ce qu'**une suspension fermentable est fermentée avec dégagement de gaz méthane, avant que son résidu de fermentation (17) ne soit introduit dans le bassin de transformation en humus sous la forme d'une suspension aqueuse de matières organiques.

10. Procédé selon la revendication 9, **caractérisé en ce que** la suspension fermentable est obtenue à partir de déchets biodégradables (20) ou de matières premières à croissance végétale, par addition d'eau (21).
